# EUROPEAN PATENT APPLICATION

(11) **EP 4 793 615 A1**
(43) Date of publication of application: **19.08.2026**
(21) Application number: 25158137.7
(22) Date of filing: 14.02.2025
(51) Int. Cl.: G01M 3/28, G01M 13/003

(54) **DIGITISED PRESSURE SAFETY VALVE WORKBENCH**

(71) Applicant: Inline Test AS, 6425 Molde (NO)
(72) Inventor: BUER, Albert, 6425 Molde (NO); HØYDAHL SØRLI, Jan Gregor, 6425 Molde (NO)
(74) Representative: Gill Jennings & Every LLP

(57) **Abstract**

A testing system for modifying a manual valve testing workbench for testing of a pressure safety valve, wherein the system comprises: a pressure sensor; a connector for connecting the system to a manual pressure safety valve testing workbench. The system further comprises a processor configured to: record the pressure data measured by the pressure sensor during the testing of the pressure safety valve in the manual valve testing workbench; and a user interface, wherein the user interface is configured to display the measured pressure data against a time at which the measurements were made.

## Description

### FIELD OF THE INVENTION

This disclosure relates to a system for testing a pressure safety valve as well as a method for testing a pressure safety valve.

### BACKGROUND

A pressure safety valve, otherwise known as a PSV, is a safety device used to protect equipment and systems from exceeding safe pressure limits. It is designed to automatically release pressure when the amount of pressure exceeds a predetermined level, ensuring that pressure vessels, such as pipelines, remain within their operational safety range.

The primary function of a PSV is to prevent overpressure conditions that could result in equipment damage, hazardous leaks, uncontrolled rapid depressurisations, and other safety risks. When the pressure inside a system exceeds the valve's predetermined limit, the PSV opens to reduce the pressure in the system. Once the pressure in the system reduces to safe levels, the valve resets itself and closes.

Pressure safety valves are widely used in industries such as oil and gas, chemical processing, power generation, and manufacturing. However, to ensure that PSVs are capable of performing their above tasks they require regular and stringent testing to ensure reliability and safety.

Currently, a PSV is tested at predetermined intervals, and during testing they are first visually inspected for any obvious, and visible, faults. Once the visual inspection has been completed, the PSV is mounted into a PSV testbench where a technician can then perform the testing. The PSV testbench usually comprises means to pressurise the PSV as well as a pressure meter and gauge to demonstrate the current pressure within the PSV. The testing comprises gradually increasing the pressure within the PSV over a predetermined period of time until the PSV opens and releases pressure. The pressure at which the PSV opens is then noted. Alternatively, testing may comprise increasing the pressure to a set point and maintaining it at this value to determine the presence and severity of any leaks. During testing, the pressure is typically increased via a technician manually controlling the PSV testbench, wherein the technician uses the gauge on the testbench to determine how quickly to increase the pressure as well as to note the pressure at which the PSV opened.

If the PSV fails the test, either by prematurely releasing pressure, or only releasing pressure above the predetermined pressure (or, in the worst case, not opening to release pressure at all) then the PSV will be dismantled and inspected in detail. If the PSV passes the test, in other words it releases pressure once the pressure reaches the predetermined level and then resets and closes once the pressure has returned to an acceptable level, then it can be sent back out into the field for continued use.

However, the way in which PSVs are currently tested results in a number of problems.

Firstly, as the technician is required to perform the testing manually, repeatable testing is very difficult to achieve. The testing is likely to be performed differently by different technicians. For example, they may apply the pressure at different rates, determine an activation of the valve at slightly different stages or document the condition of the valve differently. For example, some technicians may choose different end points for their tests, where they may consider the end to be when the PSV first opens but does not remain open (otherwise known as the PSV simmering) for an extended period, while other technicians may consider the end point to be when the PSV remains open.

Even when the test is carried out by the same technician, the exact testing parameters are likely to vary. For example, the rate at which the pressure is increased is difficult to repeat from test to test since the pressure increase is normally controlled by a technician by turning a manual wheel on the testbench and in response will be provided with a pressure gauge reading. Therefore, for every test, there is an element of "feel" required by the technician. This is particularly problematic, as the PSV is a very important safety component in many systems and therefore ensuring that the testing is conducted within regulations and is repeatable/standardised is important.

Furthermore, a technician may not be aware of the recommended testing parameters for a specific PSV specified by the PSV's manufacturer or by a certain standard. Therefore, the technician may perform the test on a PSV using the wrong parameters for that specific PSV.

Furthermore, poor documentation of the testing, where either that too little documentation is undertaken or the documentation is not correct, is possible as the testing is undertaken manually and often relies on the technician to manually document the test. Certain stages in the testing may be rushed or missed, and there are current no automated processes in order to stop the testing from continuing in its incomplete form.

Therefore, there is currently a need for system and method which allows for more repeatable, consistent, and traceable testing of PSVs.

### SUMMARY OF INVENTION

In an aspect of the present invention there is provided a testing system for modifying a manual valve testing workbench for testing of a pressure safety valve. The system comprises a pressure sensor and a connector for connecting the system to a manual pressure safety valve testing workbench. The system also comprises a processor configured to record the pressure data measured by the pressure sensor during the testing of the pressure safety valve in the manual valve testing workbench. Lastly, the system comprises a user interface, wherein the user interface is configured to display the measured pressure data against a time at which the measurements were made.

The above aspect provides the benefit of ensuring that the PSV testing is completed in a repeatable, consistent, and traceable manner. Thus, the testing can be better ensured to be within industrially recognised, or manufacturer and/or end user specified, regulations and standards. Specifically, it is now possible to provide a standardised pressure curve, as the rate of increase in pressure can be more easily controlled, from one test to another.

Furthermore, as the pressure is recorded and the time at which the measurements are taken, documentation of the testing becomes at least partially automated, and is free from error and includes more detailed information than is otherwise possible.

The processor may be configured to control the user interface to display the measured pressure data against a time in which the measurements were made in a number of different ways. In one example, the user interface may display a rate of change of applied pressure, over a preceding time period. Preferably the user interface is configured to display the measured pressure data against time in the form of a graph curve. In particular, the user interface may be continually updated to show an updated graph curve based on the continually received pressure data measured by the pressure sensor. The user interface is preferably configured to continually update a pressure-time curve to provide a visual indication of the change of pressure with time. In this way, the user can visualise both the current applied pressure and changes in applied pressure during the test. The curve may display pressure data over a time period corresponding to the test duration and/or a preceding time period that may be just a portion of the test duration.

Preferably, the processor is further configured to determine a current rate of pressure change measured by the pressure sensor during the testing of the pressure safety valve. Even more preferably, the user interface is configured to display the determined current rate of pressure change.

When the processor determines the current rate of change of pressure, the user interface may also be configured to prompt the user by audibly and/or visually indicating if the rate of pressure increase and/or current pressure is too great or too small.

This is beneficial as it allows the user to be warned if the pressure they are applying to the pressure safety valve is too great or too small for the period of the test they re currently in. This helps the user produce a repeatable and consistent pressure safety valve test.

Preferably, the user interface may be configured to guide the user in manually controlling the pressure applied to the pressure safety valve during testing of the pressure safety valve.

This is beneficial because as it further aids the user in producing a repeatable and consistent pressure safety valve test. This is achieved as the user is can more easily repeat a consistent pressure curve against time for the pressure safety valve test, thereby providing a repeatable and consistent test.

When the user interface is configured to guide the user in manually controlling the pressure applied to the pressure safety valve during testing of the pressure safety valve, the user interface may be further configured to continuously guide the user in manually controlling the pressure applied to the pressure safety valve during testing of the pressure safety valve.

The continuous guidance of the user is beneficial as it means that throughout the pressure safety valve test the user is provided with prompts and guides in order to best ensure that they will be able to create the ideal pressure against time curve.

When the user interface is configured to continuously guide the user, the user interface may be further configured to display a graph curve representing the measured pressure against time taken overlaid on a pre-set optimum pressure against time curve, thereby guiding the user in adjusting the applied pressure to track the optimum pressure against time curve.

Such graphical guidance is beneficial as it allows for a lot of information to be provided to the user quickly, as well as for that information to be in easily understandable format.

When the use interface is configured to display a graph curve, the graph curve representing the measured pressure against time may be updated in real time to aid in the user in adjusting the applied pressure so that the graph curve tracks the optimum pressure against time curve.

This is beneficial as it aids in the continual guidance of the user throughout the test.

Preferably, the user interface may be further configured to guide the user to manually vary the pressure during the testing of the pressure safety valve by displaying visual bounds on the user interface to indicate to the user a range in which the applied pressure should maintained.

Preferably, the user interface may be configured to provide a visual or audible prompt to guide the user in manually controlling an applied pressure during testing, wherein the processor would be configured to determine a pressure safety valve type being tested and adapt the prompt based on the determined type of pressure safety valve.

This is beneficial as it ensures that the correct guidance is provided for the specific pressure safety valve being tested. This allows for a tailored test to be provided, either to a specific pressure safety valve or the general type of pressure safety valve being tested.

For example, the test can be tailored to a manufacturer's recommended test parameters. The manufacturer of a certain PSV may recommend that a rate of increase of the applied pressure should be between 0.05 to 0.2 bars per second, or more preferably between 0.1 to 0.2 bars per second, or substantially constantly 0.15 bar per second. Therefore, based on the specific PSV being tested, the user can be guided to perform a test that conforms with the manufacturer's recommended rate of increase, for example substantially 0.15 bar. Equally, when another PSV is tested, with a different recommended rate of pressure increase, or time at which it should be kept at substantially 90% of the opening pressure to test for leakage, may be different to the PSV last tested by a user. Rather than the user simply testing the current PSV using the parameters which were appropriate for the previous PSV, the UI can update its prompts and can guide the user using the appropriate prompts for the parameters required for the current PSV.

When the user interface is configured to provide a visual or audible prompt to guide the user, the processor may be configured to determine the pressure safety valve type based on a received user input, such as a unique identifier of the PSV, or automatically based on data received by one or more sensors provided in the system (for example, via an optical sensor of the system scanning a machine-readable label of the PSV, ). In another example, a user may upload an image of the PSV and the processor my be configured to determine the PSV type using an image processing algorithm.

The system may comprise a memory holding testing parameters for a plurality of pressure safety valve types. The processor may be configured to select the testing parameters from the memory corresponding to the determined pressure safety valve type. The processor may be configured to then use the selected testing parameters to guide the user to perform testing of the pressure safety valve.

As in all examples, guiding the user may comprise outputting a prompt, for example an audible and/or visual prompt, to the user to guide the user in controlling the manual valve testing workbench. The prompt may be varied in response to the pressure data recorded by the pressure sensor during testing. In particular the prompt may comprise instructions in how to control an input, or actuator, of the manual valve testing workbench to provide a required applied pressure or rate of pressure change. For example the instructions may comprise a displayed optimum pressure against time curve to be followed by the user, upon which the real-time sensed pressure is displayed. In this way, the testing system guides a continued human-machine interaction to guide the user in applying a varying pressure to test the pressure safety valve according to a predefined protocol, where the protocol may be dependent on the specific PSV type and/or the test to be performed. The input of the manual valve testing workbench may be a pressure control, for example a wheel or other manual input, that modulates an applied pressure to a connected pressure safety valve.

This is beneficial as it results in a more efficient test as less time is required in the initial setting up of the test, and similar to what was discussed above, the tailoring of a test to a specific pressure safety valve is beneficial.

Preferably, the processor may be configured to provide a prompt to the user interface prompting the user to input a visual inspection result.

This is beneficial as it allows for the automatic documentation and recordal of the results of the visual inspection, if required, and may provide a means to inhibit the test unless a visual inspection is first carried out.

When the processor is configured to provide a prompt to the user interface prompting the user to input a visual inspection result, the processor may be further configured to prevent a pressure test being performed or the results being stored if a visual inspection result is not input by the user into the user interface.

As touched on above, this is beneficial as it stops a test from being undertaken if a visual inspection is not first performed. If a visual inspection is not first undertaken, it may result in a void test at best, and in the worst case, may result in a dangerous test being undertaken as the pressure safety valve may have be damaged, for example.

Preferably, the system is configured to convert a manual pressure safety valve testbench to a digital pressure safety valve testbench.

This is beneficial as it allows for the easy communication and storage of the data measured and recorded in the test.

Preferably, the system is configured such that the pressure measurements, and the time at which they were taken, are automatically sent to a remote database, wherein the system is configured to allocate a test-specific identifier to the measurements for each test undertaken.

This ensures the full and correct documentation of each test is provided at the end of each test, and allows for the easy retrieval and analysis of previous and current tests in order to determine the condition of a pressure safety valve.

Preferably, in response to an input to the user interface, the processor is configured to control the pressure increase over time based on a pre-set test for the pressure safety valve, wherein the connector comprises an actuator to control the pressure controller.

This allows for the entire testing of a pressure safety valve to be done autonomously, while still using, as the hardware base, a manual testing workbench. Such automation results in a great reduction in, or removal of, human error that is introduced in current pressure safety valve testing using manual test benches.

Preferably, the user interface is configured to provide an opening pressure test by providing a visual or audible prompt to guide the user to apply an increasing pressure to determine a pressure at which the pressure safety valve opens.

Preferably, the user interface is configured to provide a seat tightness test by providing a visual or audible prompt to guide the user to control a manual input of the workbench to maintain an applied pressure within a predetermined pressure range for a predetermined time period.

Preferably, the system comprises a leak sensor for detecting a leak from the valve. When the system comprises a leak sensor for detecting a leak from the valve, preferably the leak sensor comprises a bubble counter for measuring an amount of gas which is leaked by the valve.

This is beneficial as it allows for any leaks to be accurately measured, as well as the degree to which the pressure safety valve is leaking to be measured.

Preferably, the connector comprises a T joint to connect inline with a pressure pipe of the manual pressure safety valve testbench to allow for fluid communication between the manual pressure safety valve testbench and the system.

A method of testing a pressure safety valve in a manual valve testing workbench, wherein the method comprises: connecting, by a connector, a testing system to a manual pressure safety valve testing workbench; measuring, by a pressure sensor of the testing system, the pressure applied to the pressure safety valve during testing; recording, by a processor of the testing system, the pressure data measured by the pressure sensor during the testing of the pressure safety valve in the manual valve testing workbench; displaying, by a user interface of the testing system, the measured pressure data against a time at which the measurements were made.

The above aspect provides the benefit of ensuring that the PSV testing method is repeatable, consistent, and traceable. Thus, the testing can be better ensured to be within industrially recognised regulations and standards. Specifically, it is now possible to provide a standardised pressure curve, as the rate of increase in pressure can be more easily controlled, from one test to another.

Furthermore, as the pressure is recorded and the time at which the measurements are taken, documentation of the testing becomes at least partially automated, and is free from error and includes more detailed information than is otherwise possible.

Preferably, the method further comprises determining, by the processor, a current rate of pressure change measured by the pressure sensor during the testing of the pressure safety valve, and displaying, by the user interface, the determined current rate of change.

Preferably, the method further comprises guiding, by the user interface, the user to conduct a pre-set test for a pressure safety valve.

Preferably, wherein the method further comprises guiding, by the user interface, the user to conduct a pre-set test for the pressure safety valve by providing visual bounds to indicate to the user how to increase the pressure over time.

Preferably, the method further comprises prompting, by the user interface, the user to provide a repeatable test by audibly and/or visually indicating if the rate of pressure increase is too great or too small.

Preferably, the test is an opening pressure test or a seat tightness test. An opening pressure test may also be known as a test for the cold differential test pressure.

Preferably, the method further comprises not allow a pressure test to be undertaken, by the processor, if a visual inspection is not first logged.

A processor, wherein the processor is configured to perform the steps specified in any of the appended claims.

A user interface, wherein the user interface is configured as specified in any of the appended claims.

A computer-readable storage medium, wherein the computer storage medium comprises instructions which, when executed by a processor, cause the computer to carry out the method of the appended method claims.

A computer program product, wherein the computer program comprises instructions which, when executed by a processor, cause the computer to carry out the method of the appended method claims.

### BRIEF DESCRIPTION OF DRAWINGS

Embodiments of this disclosure will now be described with reference to the figures, in which:
Figure 1 depicts a pressure safety valve manual test bench;
Figure 2 depicts a testing system for modifying a manual valve testing workbench for testing of a pressure safety valve in an embodiment of the invention;
Figure 3 depicts a user interface of a testing system for modifying a manual valve testing workbench for testing of a pressure safety valve in an embodiment of the invention;
Figure 4 depicts another user interface of a testing system for modifying a manual valve testing workbench for testing of a pressure safety valve in an embodiment of the invention;
Figure 5 depicts a user interface of a testing system for modifying a manual valve testing workbench for testing of a pressure safety valve in an embodiment of the invention;
Figure 6 depicts the method of testing a pressure safety valve in a manual valve testing workbench in an embodiment of the invention; and
Figure 7 depicts the method of testing a pressure safety valve in a manual valve testing workbench in an embodiment of the invention.

### DETAILED DESCRIPTION

The present disclosure relates to a system for testing a pressure safety valve as well as a method for testing a pressure safety valve.

A pressure safety valve, otherwise known as a PSV, is a safety device used to protect equipment and systems from exceeding safe pressure limits. It is designed to automatically release pressure when the amount of pressure exceeds a predetermined level, ensuring that pressure vessels, such as pipelines, remain within their operational safety range.

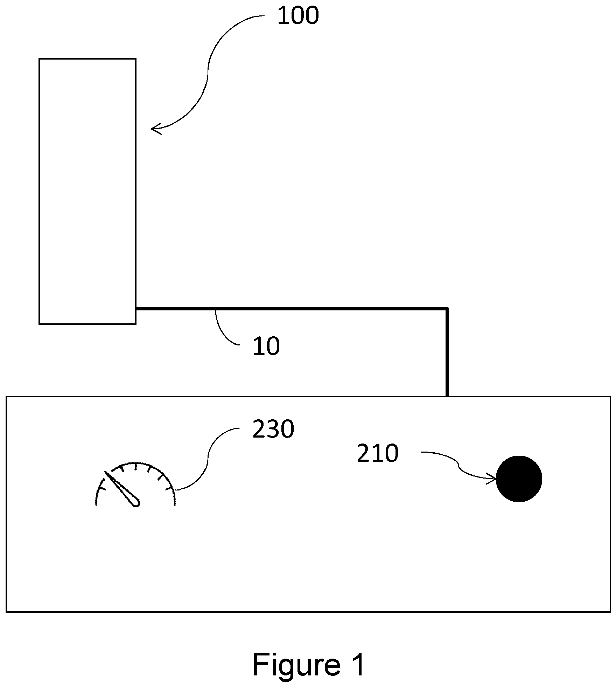

Figure 1 depicts a pressure safety valve manual test bench comprising the test bench 200 itself as well as the pressure safety valve, PSV, 100 wherein the test bench 200 is connected via an connection 10 to the inlet of the PSV 100.

The input 10 may be used by the test bench 200 to apply pressure to the PSV 100 and pressure readings of the applied pressure can be displayed on a pressure gauge 230, which will usually be an analogue pressure gauge.

The user using the test bench 200 can increase or decrease the pressure applied to the PSV 100 via an actuator 210, such as a knob, wheel, button, or lever. The pressure increase, the rate of which is controlled manually by the user using the actuator 210, is achieved typically via the provision of a gas compressor or a reservoir of high-pressure gas.

Currently, the testing of the PSV 100 comprises gradually increasing the pressure within the PSV 100 over a predetermined period of time until the PSV 100 opens and releases pressure. The pressure at which the PSV 100 opens is then noted. Alternatively, or additionally, testing may comprise increasing the pressure to a set point and maintaining it at this value to determine the presence and severity of any leaks. The user, during testing, uses the gauge 230 on the testbench 200 to determine how quickly to increase the pressure as well as to note the pressure at which the PSV 100 opened.

However, the way in which PSVs 100 are currently tested, using the manual test bench 200 system shown in Figure 1, results in a number of problems.

Firstly, as the user is required to perform the testing manually, repeatable testing is very difficult to achieve and testing is likely to be performed differently by different users. For example, the users may apply the pressure at different rates, determine an activation of the valve at slightly different stages or document the condition of the valve differently. For example, some users may choose different end points for their tests, where they may consider the end to be when the PSV 100 first opens but does not remain open (otherwise known as the PSV simmering 100) for an extended period, while other users may consider the end point to be when the PSV 100 remains open.

Even when the test is carried out by the same user, the exact testing parameters are likely to vary. For example, the rate at which the pressure is increased is difficult to repeat from test to test since the pressure increase is controlled by a user by manipulating an actuator 210 on the testbench 200 and in response will be provided with a simple pressure gauge 230 reading. Therefore, for every test, there is an element of "feel" required by the user. This is particularly problematic, as the PSV is a very important safety component in many systems and therefore ensuring that the testing is conducted within regulations and is repeatable/standardised is important.

Furthermore, poor documentation of the testing, where either that too little documentation is undertaken or the documentation is not correct, is possible as the testing is undertaken manually and relies on the user to manually document the test. Certain stages in the testing may be rushed or missed, and there are currently no automated processes in order to stop the testing from continuing in its incomplete form.

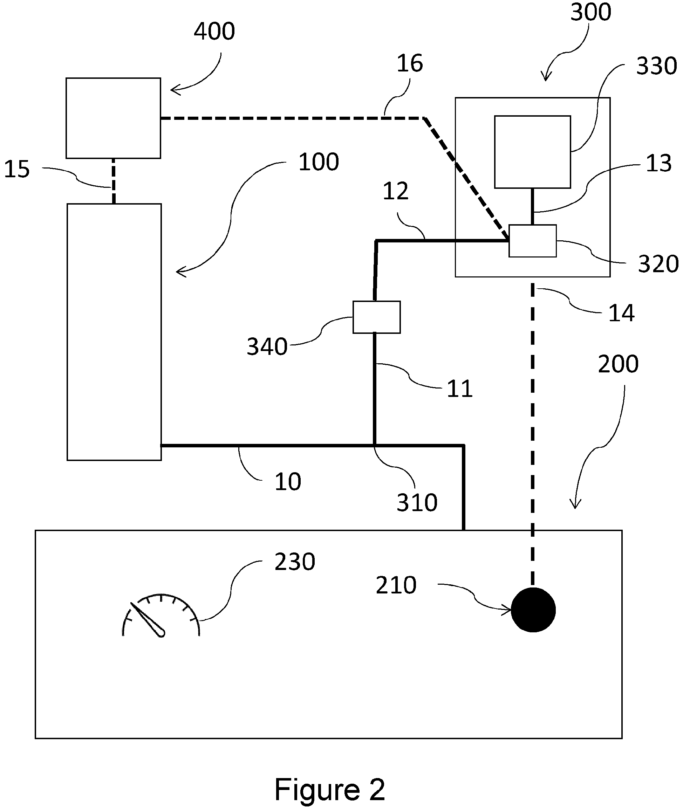

In order to solve the above issues, this disclosure discusses a system 300 for modifying a manual valve testing workbench 200 for testing a pressure safety valve 100, which is depicted in Figure 2.

Figure 2 depicts a testing system 30 for modifying a manual valve testing workbench 200 for testing a pressure safety valve 100 wherein the system 300 comprises a connector 310, a processor 320, a user interface 330, and a pressure sensor 340.

The connector 310, which may be a T joint attached to the input 10 of the manual test bench 200 to the PSV 100, allows for the pressure being applied to the PSV 100 to be acquired by the add on system 300. The connector 310 is connected to a pressure sensor 340 of the system 300 via a pipe 11. The pressure sensor 340 measures the pressure applied to the PSV 100 by the testbench 200 and sends the measured result, via wire/connection 12, to the processor 320.

The processor 320 is configured to then record the pressure data measured by the pressure sensor during the testing of the pressure safety valve in the manual valve testing workbench.

The processor 320 can then communicate to the user interface 330, via wire/connector 13, the pressure data measured by the pressure sensor during the testing of the pressure safety valve in the manual valve testing workbench.

The user interface 330 can then display, to a user, a the display the measured pressure data against a time at which the measurements were made.

The processor 320 can also be configured to determine a current rate of pressure change measured by the pressure sensor during the testing of the pressure safety valve.

As also shown in Figure 2, the system 300 may also comprise a means for adjusting the actuator 210 and/or a bubble counter 400.

The means for adjusting the actuator 210 could be, for example, a mechatronics system actuated by signals sent from the processor 320. Other actuators which enable the testing system 300 to control autonomously control the pressure applied to the PSV are possible. This automation allows for the processor 320 to control the testing of the PSV 100 to ensure a consistent and repeatable test via removing almost all aspects of human error. Therefore, in certain embodiments, the system is configured to control the testing autonomously from a user.

A bubble counter may also be provided, wherein the bubble counter 400 is connected via connection 15 to the PSV 100. The connection 15 must be "upstream" of the PSV during testing in order to collected and leaked bubbles. The bubble counter 400, can be used to determine if there is a leakage and gases escaping from the PSV 100 and the rate at which gas is leaking. The bubble counter 400 achieves this via counting the number of bubble which are released from the PSV 100 during testing, via the bubble breaking the beam of a laser for example. Such a bubble counter 400 provides a means of measuring both whether or not a leak is present, but also the rate at which the PSV 100 is leaking.

The bubble counter is connected via connection 16 to the processor 320 of the testing system 300 in order for all the test data to be accessible to the processor 320 if a bubble counter 400 is indeed being used.

The testing system 300, as depicted in Figure 2, ensures that testing is completed at highest quality, and specifically ensures that the test fit within the strict regulations required. Furthermore, the above discussed testing system 300 ensures that the PSV 100 tests are repeatable and standardised, thereby allowing for a better understanding of the conditions of the PSVs allowing for the lifespans of the PSVs to be extended and/or the time between maintenance tests to be extended and/or reduces the likelihood that a PSV unexpectedly fails while in use. Therefore, the above discussed testing system improves the safety of the PSVs in use as the regular testing of the PSVs in their maintenance schedule is improved.

In addition to the above, as all of the data is centrally recorded by the processor 320, it allows for the direct addition of the testing data set to the This helps improved future predictions of maintenance interval as well as to keep a record of the PSV over its entire lifespan. This allows for the relative decrease in performance of the PSV since its last test to be easily found, and used to predict when the next test will need to be undertaken, and eventually when the lifespan of the PSV will need to end.

Therefore, in summary, the testing system 300 provides a means to provide a standardised pressure curve during testing, via guiding the user undertaking the test and/or by automating the testing, such that repeatable and accurate testing of the PSVs 100 can be undertaken.

Any of the connections discussed above, apart from the connector 310 and connections 11 and 15, may be wired (via a wire or an equivalent) or wireless (via the internet, Bluetooth, ANT+, wireless telecommunications, or the like) as the connection is there to provide the transfer/communication of information. On the other hand, the connector 310 and connections 11 and 15 which need to be configured to communicate a gas or fluid, or both, from one feature to another.

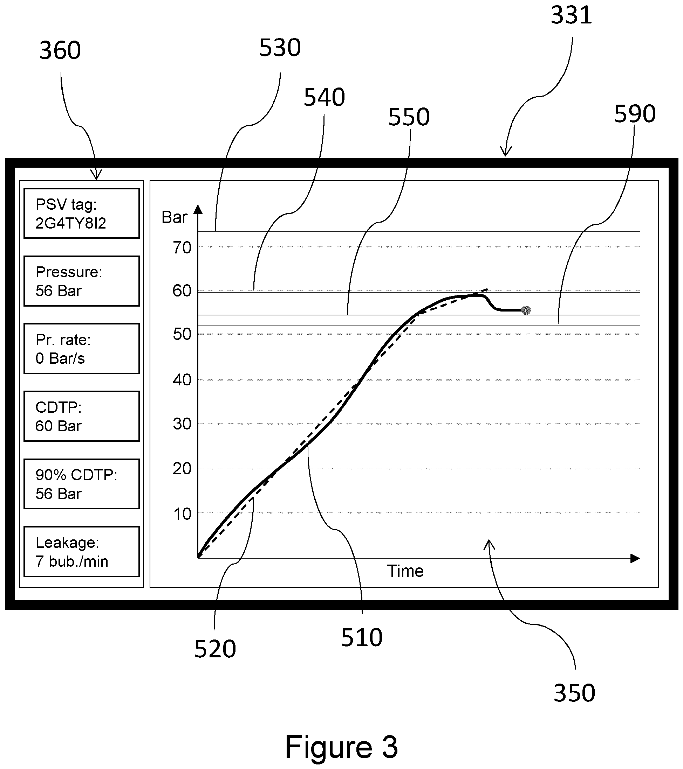

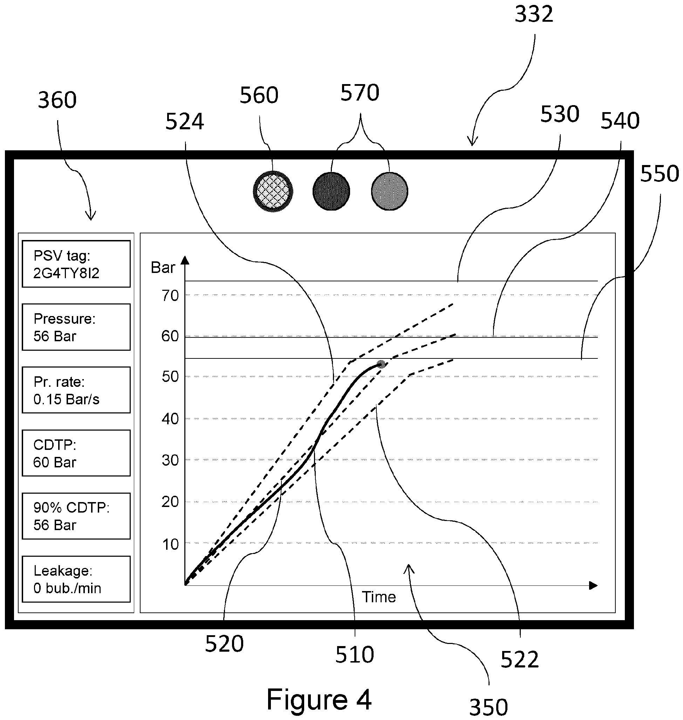

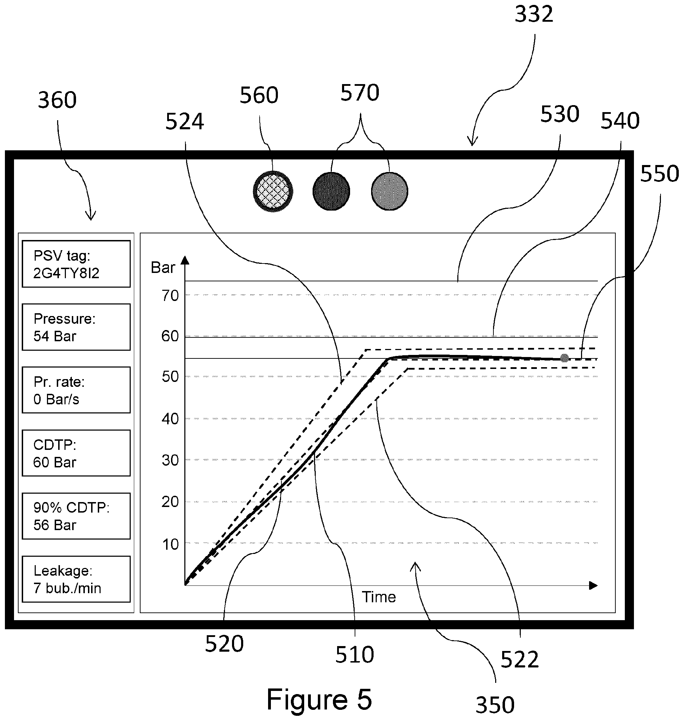

Turning to the user interface 330, Figures 3 to 5 depict some of the embodiments of this disclosure and show the features and functionality that the UI may have 330. Figures 3 and 4 depict a UI 331, 332 during a PSV 100 opening pressure test, otherwise known as a cold differential test pressure test (CDTP), wherein the pressure is increased until the PSV 100 opens. Figure 5 depicts a UI 333 during a PSV 100 wherein the test is a seat tightness test and leakage of the PSV at high temperatures is assessed.

Figure 3 depicts a user interface 331 of a testing system 300 for modifying a manual valve testing workbench 200 for testing of a pressure safety valve 100 in an embodiment of the invention.

As can be seen in Figure 3, a user interface, UI, 331 is provided that displays a pressure against time graph 350 as well as, optionally, numeric values related to the testing. The UI 331 may be a tablet, a computer, a mobile device, or any screen or device capable of being configured to display the measured pressure data against a time at which the measurements were made.

It will be understood that the UI 331 may have other screens, displaying other values and graphs, as well as input boxes to allow the user to input information. For example, the user may be prompted to input the PSVs 100 unique identifier, or to confirm if they have completed an external visual inspection before testing begins, or to select which test to run on the PSV, for example, in input boxes displayed on the UI 330. Additional information which is displayed to the user while undertaking the test is discussed below in relation to additional information display 360.

On the pressure against time graph 350 displayed on the UI 331, the pressure applied to the PSV 100 during testing can be seen via the plotted line 510. This plotted line 510 may be replaced by only visual and/or audible prompts to the user to indicate the pressure against time.

In the embodiment shown in Figure 3, it can be seen that the user is guided during testing via the provision of a reference ideal pressure against time plot 520. The user can use this reference ideal plot 520 to guide them during testing as they can see the degree to which the actual measured pressure against time plot 510 varies from it. The measured pressure against time plot 510 shown on the graph 350 of the UI 331 can be seen to deviate from the ideal plot 520 and then brought back closer to the ideal plot 520 by the user. It can be understood that the measured pressure against time plot 510 shown on the graph 350 of the UI 331 has had its deviations from the ideal plot 520 exaggerated in order to more clearly see each plot.

The user may also be guided to maintain a predetermined rate of pressure increase, wherein the processor 320 is configured to determine the current rate of pressure increase or decrease. The user may be guided by the UI 331 via visual or audio prompts to guide them to keep the rate of pressure increase within a predetermined range in order to produce the ideal pressure curve.

The graph 350 of the UI 331 may also visually depict the maximum pressure 530 that should be applied to the PSV 100 during testing of its opening pressure. This ensures that the user does not accidentally overshoot the applied pressure during testing and accidentally reach unsafe conditions. Furthermore, the processor may be configured to inhibit testing if the pressure is reached. The processor may be configured to achieve this via prompting the UI 331 to provide a pop up message to the user that testing is not possible, or to prompt the UI 331 to set off an audible warning. If the testing system 300 comprises a means for adjusting the actuator 210 of the manual test bench 200, then the processor 320 can inhibit testing if required by adjusting, or keeping, the actuator to apply no pressure to the PSV 100.

The graph 350 of the UI 331 may also visually depict the predicted opening pressure value 540 for the PSV being tested. This is depicted as a line 540 in the graph 350 of the UI 331 but may instead be an audible signal produced when the applied pressure to the PSV 100 approaches, and reaches the predicted opening pressure value 540 for the PSV being tested.

The graph 350 of the UI 331 may also depict a value equating to 90% of the predicted opening pressure value 540 for the PSV being tested, which in this case is depicted via line 550. This may be useful to indicate to the user that the opening pressure will soon be reached, and that the PSV 100 may start simmering (where the PSV 100 opens partially) or open fully earlier than expected. Other indicators for this value may also be used, such as a light that may turn on or a visual and/or audible message to the user.

The graph 350 of the UI 331 may also visually depict the detected start of leakage of the PSV 100 via an indicator, such as line 590 as depicted in Figure 3, to the user. Other indictors may be audible or visual, such as a light that may turn on or a visual and/or audible message to the user.

Leakage may be detected via a sudden slight drop in the applied pressure, or the rate of pressure increase, as the leaked gas out of the PSV 100 results in a reduction in pressure in the PSV or at least a reduction in the rate of increase in the pressure applied to the PSV. If the leakage is determined via a change in pressure or rate of pressure change, then the processor is configured to undertake this detection based on the pressure measurements it records.

Alternatively, or additionally, the leakage may be detected via a bubble counter 400 that detects the number of bubbles of gas emitted by the PSV. If the leakage is determined via a bubble counter, then the detection of leakage is undertaken by the bubble counter, but the results of which are still sent to the processor 320 (via a connection 16).

As well as the graph 350 of the UI 331, the UI 331 may also provide information to the user via displaying relevant information and data related the test in a section, or multiple sections, of the screen 360. For example, the data displayed may be any one or more of: the UI 331 may display the unique PSV 100 identifier of the PSV being tested, the currently applied pressure, the rate at which the applied pressure is being increased, or decreased, the expected opening pressure (or the "CDTP"), a value which is 90% of the expected opening pressure (or the "90% CDTP), and/or the rate at which leakage is occurring out of the PSV. This list of examples of displayable data is not an exhaustive list of possible displayed data points.

Figure 4 depicts another user interface 332 of a testing system 300 for modifying a manual valve testing workbench 200 for testing of a pressure safety valve 100 in an embodiment of the invention. The UI 332 may be a tablet, a computer, a mobile device, or any screen or device capable of being configured to display the measured pressure data against a time at which the measurements were made.

On the pressure against time graph 350 displayed on the UI 332, the pressure applied to the PSV 100 during testing can be seen via the plotted line 510. This plotted line 510 may be replaced by only visual and/or audible prompts to the suer to indicate the pressure against time. This can be achieved via lights, such as shown on the UI 332 as 570, or via a speaker, shown on the UI 332 as 560. Furthermore, the lights 570 and/or speakers 560 may indicate to the user when the PSV 100 has reached a simmering point, has opened fully, or is about to exceed the maximum allowable pressure.

The UI 332 of Figure 4 differs from the UI 331 of Figure 3 in that it provides additional guidance to the user via plotted lines 522 and 524 which demonstrate the minimum 522 and maximum 524 allowable pressure to be applied to the PSV 100 during testing for the test to remain within the required tolerance and repeatability.

Figure 5 depicts a user interface 333 of a testing system 300 for modifying a manual valve testing workbench 200 for testing of a pressure safety valve 100 in an embodiment of the invention. The UI 333 may be a tablet, a computer, a mobile device, or any screen or device capable of being configured to display the measured pressure data against a time at which the measurements were made.

Figure 5 illustrates a seat tightness test, wherein the pressure applied to the inlet of the PSV 100 is increased up to percentage, usually 90%, of the opening pressure (or CDTP) of the PSV 100 and then held at this value for a period of time, usually at least a minute. The seat tightness test is typically undertaken after the opening pressure, or sometimes called a "pop" test, in order for the opening pressure value to be known.

On the pressure against time graph 350 displayed on the UI 333, the pressure applied to the PSV 100 during testing can be seen via the plotted line 510. This plotted line 510 may be replaced by only visual and/or audible prompts to the suer to indicate the pressure against time. This can be achieved via lights, such as shown on the UI 333 as 570, or via a speaker, shown on the UI 332 as 560. Furthermore, the lights 570 and/or speakers 560 may indicate to the user when the PSV 100 has reached the preset pressure and/or if there is any leakage, and the degree to which leaking is occurring.

It can be understood that any of the features of Uls 331, 332, 333 depicted in Figures 3 to 5 may be used together. For example, the user may be provided with audio prompts from speaker 560, prompts from lights 570, and prompts from the graph 350 and its many guiding plots 520, 522, 524, 530, 540, 550 - alternatively, the UI 330 may instead only provide one or some of these to prompt the user.

In other words, the addition or removal of feature from any of the Uls does not require modifications of other features as long as at least one means of displaying (displaying can mean either visually via a graphical graph or via light indicators, or audibly, or a combination of these) the measured pressure data against a time at which the measurements were made is provided to the user.

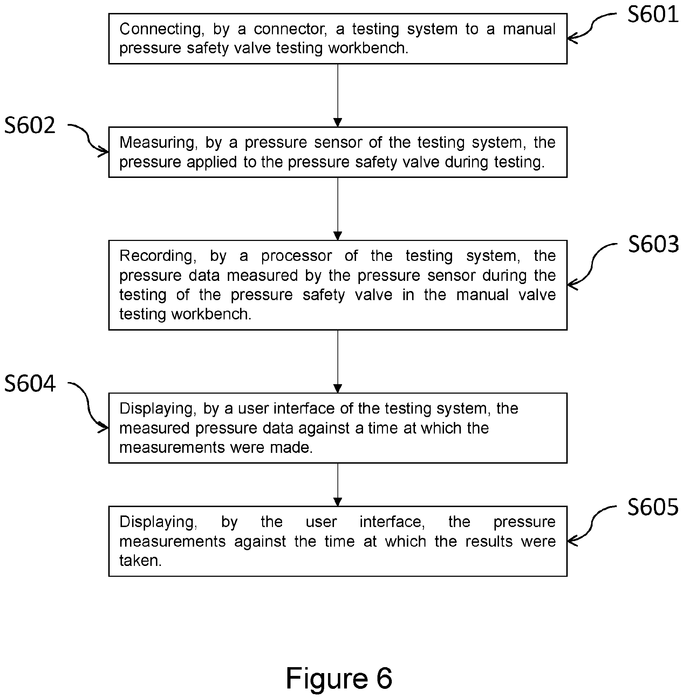

Figure 6 depicts the method of testing a pressure safety valve in a manual valve testing workbench in an embodiment of the invention. The method steps of Figure 6 are applicable for a opening pressure test or a seat tightness test.

In step S601, the users connects, by using the a connector 310, a testing system 300 to a manual pressure safety valve testing workbench 200. The connecter 310 may be a T joint which connects to the pressure pipes of the manual pressure safety valve testing workbench 200. Other means of connecting the testing system to a manual pressure safety valve testing workbench are possible and a T joint is not essential.

The connector 310 may also be able to connect to the workbench 200 such that the workbench 200 can communicate with the system 300 in the situation where the workbench 200 produces any digital measurements. Additionally, or alternatively, the system 300 may be connected to the workbench 200 via a connection 14 which allows the system to control the pressure applying system of the workbench 200.

Following the connection of the system 300 to the workbench 200, the user may perform a visual inspection of the PSV 100 before testing begins in order to check for any obvious faults and to check if the PSV 100 is safe to test.

Following the connection of the system 300 with the workbench 200, testing may commence, and step S602 is therefore to measure, by a pressure sensor 340 of the testing system, the pressure applied to the pressure safety valve during testing. The pressure sensor 340 is connected via the connector 310 and connection 11 to the workbench 200 such that it is able to measure the pressure applied to the PSV 100 during testing. The connection 11 between the connector 310 and the pressure sensor 340 may be any pipe, or equivalent, capable of placing the pressure sensor 340 in fluid communication with the means of placing the PSV 100 under pressure.

Following the step of measuring the pressure applied to the PSV 100 during testing, step S603 consists of recording, by a processor 320 of the testing system, the pressure data measured by the pressure sensor 340.

Following the recording, by the processor 320, of the pressure data measured by the pressure sensor 340, step S604 is to display, by a user interface 330 of the testing system 300, the measured pressure data against a time at which the measurements were made.

Step S605 consist of displaying, by the user interface, the pressure measurements against the time at which the results were taken.

Therefore, following method steps S601 to S606, results in the provision of a method of testing a pressure safety valve 100 in a manual valve testing workbench 200, via the provision of a testing system 300, wherein the tests are repeatable, consistent and reliable.

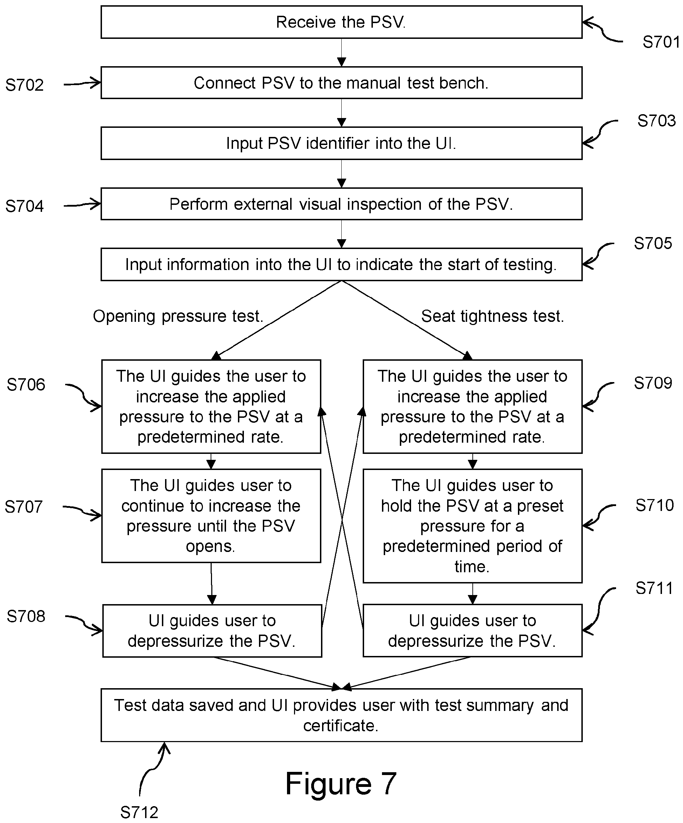

Figure 7 depicts the method steps undertaken by a user throughout the testing of a pressure safety valve 100 in a manual valve testing workbench 200 using a testing system 300 of an embodiment of the invention from start to finish.

Firstly, as shown in step S701, the first step that is the receiving of a PSV 100 for testing. This may be either straight after the PSV 100 has been manufactured or as part of a continual maintenance and checking schedule for PSVs 100 being currently used. For example, after a set period of time, or a set number of cycle of use, the PSV 100 is sent for testing.

Once the PSV has been received, the following step S702 consists of connecting the PSV 100 to the manual test bench 200. This can happen before or after the connector 310 of the testing system has been attached between the testing system 300 and the manual testing bench 200. Importantly, the connector 310 has to be connected between the testing system 300 and the manual testbench 200 before testing begins.

Step S703 consists of inputting the PSVs 100 unique identifier into the user interface 330 so that the testing system can be made aware of which PSV 100 is being tested. This step may occur immediately upon receiving the PSV 100 and before the PSV is connected to the manual test bench 200, or as is depicted in Figure 7, the unique identifier can be input after the PSV 100 is connected to the manual test bench 200.

The processor may comprise a memory which stores the unique identifiers and the required tests or is capable of communicating with an external memory, potentially in a cloud, where the required information is stored.

The unique identifier can be used to identify the make and model of the PSV, allowing for the test to conform to a manufacturer's or user-specified recommended test.

Step S704 consists of performing a visual inspection of the external features of the PSV 100 in order to determine if there are any visual faults which would indicate that the PSV 100 fails the safety check without having to be tested at pressure, or that indicate that the PSV 100 is not safe to be tested at high pressure. This step may occur immediately upon receiving the PSV 100 and before the PSV is connected to the manual test bench 200, or as is depicted in Figure 7, the this step can be undertaken after the PSV 100 is connected to the manual test bench 200 and the unique identifier is inputted into the UI 330 (or, for completeness, between steps S702 and S703). Importantly, the external visual inspection should be undertaken before the testing begins.

After the initial steps have been completed, step S705 consists of the user inputting information into the UI that indicates that testing is to begin. Such inputs may be the selection of an option, via a button, touch screen, or remote, on the UI 330 to indicate that testing is to begin. Alternatively, once steps S701 to S704 have been completed, the processor 320 can determine that a test should begin.

In some situations, the processor 320 may only allow the testing to begin if the user has inputted into the UI 330 a confirmation that they have performed the external visual inspection. The confirmation may include the uploading of documentation of the visual external inspection, such as text relating to the PSV 100 and/or photographs of the PSV 100.

Step S705 typically also comprises of the user inputting which sort of test is to be carried out; namely, either a opening pressure test and/or a seat tightness test. The user may also input the parameters of the test, such as the expected pressures to be reached during testing.

Alternatively, the processor 320 may access information from its memory or an external memory, via/in a cloud system, which informs it of which tests are to be carried out, as well as their parameters.

The following method steps assume that the user has selected an opening pressure test to start with. However, the user may start with a seat tightness test first, with method steps discussed further below, and then to move onto an opening pressure test.

Upon commencing an opening pressure testing, at step S706, the UI 330 guides the user to increase the pressure to the PSV 100 at a predetermined rate. The rate at which pressure increases can depend on the PSV 100 being tested, and/or may be set by industrial standards. The processor 320 may access information from its memory or an external memory, via/in a cloud system, which informs it of the required rate at which pressure should be increased during testing.

The UI 330 may guide the user by plotting an ideal pressure curve 520 for the user to follow, and in addition, the UI 330 may plot ranges to be kept within 522, 524. Furthermore, the UI may provide audible prompts, via a speaker 560 for example, to guide the user during testing, and/or may also provide the user with visual prompts via lights 570. The audible and/or visual prompts can indicate to the user to either increase or decrease the rate at which they are increasing the applied pressure to the PSV 100. These prompts fro the UI 330 can either not be generated when the user is creating the desired pressure curve during testing, or there may be a audible and/or visual prompt to indicate that the pressure curve being generated is an ideal one. These audible (via speaker 560, for example) and visual prompts (lights 570, for example) can either be in combination with, or as an alternative to, the graphical prompting provided by graph 350 and the previously discussed plots 510, 520, 522, 524, 530, 540, 550.

Following the initialising of the test, in step S707, the UI 339 guides the user to continue to increase the pressure at a predetermined rate until the PSV opens.

The processor 520 can better determine when the PSV has opened, and therefore the applied pressure has reached the opening pressure for the PSV 100, than a user manually doing the test, and can display this on the UI 330.

The processor is better at detecting the correct point in the test where the PSV 100 opens as it can analyze the recorded pressure measurements and determine if the PSV is still entirely closed, if it is "simmering" where the valve is only partially open or does not remain open, or if the PSV 100 has fully opened. A fully open PSV 100 is usually indicated by a sudden and significant drop in the measured applied pressure to the PSV as it is released, but then a plateauing as it reaches a steady state of applying pressure against the open PSV 100.

There may be a change in the rate at which the pressure is applied, and therefore the pressure against time plot 510 may appear more as a curve or as lines with distinct changes in gradient.

Alternatively, or in addition, to steps S706 and S707 the processor 320 may control the pressure increase, and the UI 330 may display the test as it is undertaken autonomously.

Once the opening pressure has successfully been reached, step S708 consists of the UI 330 guiding the user to depressurize the PSV 100 in a safe manner, until he PSV 100 is under no applied pressure.

Once the PSV 100 has been successfully depressurised, the testing is complete and therefore step S712 consists of the test data being saved either locally or remotely, in a cloud storage system for example, and the UI 300 providing the user with a test summary, comprising all or the most important data summaries, and a certificate for the PSV 100.

This ensures that full and complete documentation is provided and securely stored. The test data may be combined with the visual inspection documentation and/or photos.

The following method steps apply if the user selects a seat tightness test to be undertaken first, or equally if a seat tightness test is undertaken after an opening pressure test.

Either after step S705 or S708, step S709 is undertaken and consists of increasing the pressure to the PSV 100 at a sustainably constant rate.

Step S710 consists of the UI 330 guiding the user to increase the pressure to preset value, the preset value typically being 90% of the opening pressure of the PSV 100.

This preset seat tightness test pressure is held for a predetermined period of time.

Leaks can be detected via a drop in the detected pressure applied to the PSV 100 or via a bubble counter 400.

Step S711, similar to step S708 for the opening pressure test, consists of the UI 330 guiding the user to depressurize the PSV.

Once the PSV 100 has been successfully depressurised, the testing is complete and therefore step S712 consists of the test data being saved either locally or remotely, in a cloud storage system for example, and the UI 300 providing the user with a test summary, comprising all or the most important data summaries, and a certificate for the PSV 100.

As indicated above, either the opening pressure test or the seat tightness test can be undertaken first, or second, or alone.

As can be understood from the above examples and embodiment, this disclosure provides a testing system for modifying a manual valve testing workbench for testing of a pressure safety valve, and a method of testing a pressure safety valve in a manual valve testing workbench, wherein the testing of the pressure safety valve is repeatable, consistent, and reliable.

## Claims

1. A testing system for modifying a manual valve testing workbench for testing of a pressure safety valve, wherein the system comprises:
a pressure sensor;
a connector for connecting the system to a manual pressure safety valve testing workbench;
a processor configured to:
record the pressure data measured by the pressure sensor during the testing of the pressure safety valve in the manual valve testing workbench; and
a user interface, wherein the user interface is configured to display the measured pressure data against a time at which the measurements were made.

2. The system according to claim 1, wherein the processor is further configured to determine a current rate of pressure change measured by the pressure sensor during the testing of the pressure safety valve.

3. The system according to claim 2, wherein the user interface is configured to display the determined current rate of pressure change.

4. The system according to claims 2 or 3, wherein the user interface is configured to prompt the user by audibly and/or visually indicating if the rate of pressure increase and/or current pressure is too great or too small.

5. The system according to any of the preceding claims, wherein the user interface is configured to guide the user in manually controlling the pressure applied to the pressure safety valve during testing of the pressure safety valve.

6. The system according to claim 5, wherein the user interface is configured to display a graph curve representing the measured pressure against time taken overlaid on a pre-set optimum pressure against time curve, thereby guiding the user in adjusting the applied pressure to track the optimum pressure against time curve.

7. The system according to any preceding claim wherein the user interface is further configured to provide a visual or audible prompt to guide the user to manually vary the pressure during the testing of the pressure safety valve to indicate to the user a range in which the applied pressure should be maintained.

8. The system according to any preceding claim wherein the user interface is configured to provide a visual or audible prompt to guide the user in manually controlling an applied pressure during testing, wherein the processor is configured to determine a pressure safety valve type being tested and adapt the prompt based on the determined type of pressure safety valve.

9. The system according to any of the preceding claims, wherein the processor is configured to provide a prompt to the user interface prompting the user to input a visual inspection result, and wherein the processor is configured to prevent a pressure test being performed or the results being stored if a visual inspection result is not input by the user into the user interface.

10. The system according to any of the preceding claims, wherein the system is configured to convert a manual pressure safety valve testbench to a digital pressure safety valve testbench.

11. The system according to any of the preceding claims, wherein in response to an input to the user interface, the processor is configured to control the pressure increase over time based on a pre-set test for the pressure safety valve, wherein the connector comprises an actuator to control the pressure controller.

12. The system according to any of the preceding claims, wherein the user interface is configured to provide an opening pressure test by providing a visual or audible prompt to guide the user to apply an increasing pressure to determine a pressure at which the pressure safety valve opens; and/or wherein the user interface is configured to provide a seat tightness test by providing a visual or audible prompt to guide the user to control a manual input of the workbench to maintain an applied pressure within a predetermined pressure range for a predetermined time period.

13. A method of testing a pressure safety valve in a manual valve testing workbench, wherein the method comprises:
connecting, by a connector, a testing system to a manual pressure safety valve testing workbench;
measuring, by a pressure sensor of the testing system, the pressure applied to the pressure safety valve during testing;
recording, by a processor of the testing system, the pressure data measured by the pressure sensor during the testing of the pressure safety valve in the manual valve testing workbench; and
displaying, by a user interface of the testing system, the measured pressure data against a time at which the measurements were made.

14. A method according to claim 13, wherein the method further comprises guiding, by the user interface, the user to conduct a pre-set test for a pressure safety valve.

15. A computer-readable storage medium, wherein the computer storage medium comprises instructions which, when executed by a processor, cause the computer to carry out the method of claims 13 or 14.
